# EUROPEAN PATENT APPLICATION

(11) **EP 4 621 218 A1**
(43) Date of publication of application: **24.09.2025**
(21) Application number: 25162519.0
(22) Date of filing: 10.03.2025
(51) Int. Cl.: F03D 9/25, F03D 15/00, F03D 15/10

(54) **SPEED CONTROL DEVICE FOR CONTROL OF IDLER OF WIND TURBINE TO ROTATE AT CONSTANT SPEED**

(30) Priority: 21.03.2024 TW 113110581
(71) Applicant: Tsai, Jui-An, Hsinchu City 300063 (TW)
(72) Inventor: Tsai, Jui-An, Hsinchu City 300063 (TW)
(74) Representative: Lang, Christian

(57) **Abstract**

A speed control device for control of idlers of wind turbines is provided. The speed control device includes a wind-powered electrical generator, a first speed control unit, a transmission gear set, an idler energy storage unit, and a second speed control unit. A wind activation gear set of the wind-powered electrical generator is driven by a wind force with a preset value. When the wind force is lower than the preset value, a rack unit on a speed-control motor is driven by power so that a speed-control gear set and the transmission gear set are respectively driven by a first and a second unidirectional gear of the first and the second speed control units. Thus the transmission gear set is rotated for a period and an idler drives a generator main shaft of the idler energy storage unit to rotate for a period. Therefore, the idler rotates constantly, without stopping.

## Description

### BACKGROUND OF THE INVENTION

The present invention relates to a speed control device, especially to a speed control device for control of idlers of wind turbines to rotate at a constant speed.

A power supply mechanism available on the market now is a combination of a wind turbine with an idler system. By rotation of a generator main shaft with the rotating idler, electric power is generated and output. Thereby the electric power is obtained in an environmentally-friendly manner. However, wind power generation may be unable to generate electric power normally for a period of time due to no wind, unstable wind, or changing wind directions. The above factors cause the idler in the power supply mechanism unable to rotate at a constant speed or the rotation speed is slowing down gradually, and even stopped. Thereby the generator main shaft is also unable to rotate at a constant speed or the rotation speed is slowing down and even stopping. The electric power is unable to be output constantly. Thus there is room for improvement and there is a need to provide a speed control device for control of idlers of wind turbines to rotate at a constant speed, which prevents the idler in the power supply mechanism from rotating slower, and even stopping rotation.

### SUMMARY OF THE INVENTION

Therefore, it is a primary object of the present invention to provide a speed control device for control of idlers of wind turbines to rotate at a constant speed. The speed control device includes a wind-powered electrical generator, a first speed control unit, a transmission gear set, an idler energy storage unit, and a second speed control unit. When a wind turbine machine of the wind-powered electrical generator is driven to rotate by a wind force with a preset value or a value higher than the preset value, a wind activation gear set is further driven by the wind turbine machine to rotate and operate. When the wind force is having a value lower than the preset value, a cam on a speed-control motor of the first speed control unit is driven by electric power so that a speed-control gear set of the first speed control unit is driven by a first unidirectional gear of the first speed control unit and the transmission gear set is driven by a second unidirectional gear of the second speed control unit. Thus the transmission gear set is rotated for a period of time. Thereby an idler of the idler energy storage unit can drive a generator main shaft of the idler energy storage unit to rotate at a constant speed and prevent a rotation speed of an idler of a power supply mechanism from slowing down and even stopping.

In order to achieve the above object, a speed control device for control of idlers of wind turbines to rotate at a constant speed is provided. The speed control device according to the present invention includes a wind-powered electrical generator, a first speed control unit, a transmission gear set, an idler energy storage unit and a second speed control unit; wherein the wind-powered electrical generator has a wind turbine machine and a wind activation gear set; wherein the wind activation gear set is driven to rotate by the wind turbine machine when the wind turbine machine is driven to rotate by a wind force with a preset value or a value higher than the preset value; wherein the first speed control unit has a speed-control motor, a rack unit, a first swing link, a spring, a frame, a speed-control gear set, a first unidirectional bearing, and a first unidirectional gear; wherein the rack unit is located at and driven by the speed-control motor; the rack unit includes a clutch, a rack gear set, a rack-connected gear, a rack, a shock absorber, au upper clutch switch, and a lower clutch switch; wherein the clutch drives the rack gear set which drives the rack-connected gear; the rack is driven to move downward by the rack-connected gear and provided with an upper activation portion and a lower activation portion; the upper clutch switch and the lower clutch switch are respectively disposed on an upper end and a lower end of the shock absorber and both located between the upper activation portion and the lower activation portion of the rack; wherein the clutch is activated and then the rack gear set, the rack-connected gear, and the rack are driven in turn to make the rack move downward when the speed-control motor drives the clutch; wherein one end of the spring is arranged at the frame while the other end of the spring is mounted to the first swing link; the speed-control gear set, the first unidirectional bearing, and the first unidirectional gear are located on the same end of the first swing link while the speed-control motor, the rack unit, and the spring are located on the other end of the first swing link opposite to the end of the first swing link with the speed-control gear set, the first unidirectional bearing, and the first unidirectional gear; the speed-control gear set is able to be driven by the first unidirectional gear which is arranged at the first unidirectional bearing and able to rotate for a period of time while being driven; wherein when the speed-control motor is driven by electric power, the clutch of the rack unit is driven by the speed-control motor to operate and rotate; thus the first swing link is pressed down and moved by the rack of the rack unit and a first down force is generated to drive the first unidirectional bearing so that the first unidirectional gear is rotated for a period of time; now the speed-control gear set is rotated along with the first unidirectional gear for a period of time; wherein when the first swing link is released from the first down force caused by the rack of the rack unit, the first swing link is returned to the original position by elastic recovery stress of the spring; at the moment, the rack is pushed by the first swing link to move upward and back to its original position until the lower activation portion triggers the lower clutch switch to make the speed-control motor activate and supply power to the clutch; wherein the transmission gear set is able to be driven by the wind activation gear set or the speed-control gear set to rotate; wherein the idler energy storage unit has an idler, an idler gear set, a generator main-shaft gear, a generator main shaft, and a generator; the idler able to be driven to rotate by the idler gear set; after the idler starting to rotate, the idler gear set being driven to rotate for a period of time; the generator main-shaft gear able to be driven to rotate by the idler gear set and the generator main shaft being rotated along with the generator main-shaft gear; the generator creating the electric power and outputting the electric power by rotation of the generator main shaft; wherein the idler gear set drives the generator main-shaft gear and the generator main shaft to rotate synchronously for a period of time when the idler is rotated so that the generator generates the electric power by rotation of the generator main shaft; wherein the generator is electrically connected to the speed-control motor; wherein the generator provides the electric power to the speed-control motor for driving the speed-control motor to operate when the wind turbine machine is driven by a wind force with a value lower than the preset value; wherein the second speed control unit includes a second swing link having one end disposed on the speed-control gear set, a loading base , a second unidirectional bearing, and a second unidirectional gear; the loading base mounted to the other end of the second swing link, opposite to the end with the speed-control gear set; the speed-control motor, the clutch, the rack gear set, the rack-connected gear, and the shock absorber all mounted to the loading base while the second unidirectional bearing and the second unidirectional gear disposed on the other end of the second swing link, opposite to the end with the loading base; the second unidirectional gear for driving the transmission gear set, arranged at the second unidirectional bearing, and able to rotate for a period of time while being driven; wherein the second swing link and the loading base are supported by the speed-control gear set, suspended in air, and able to be driven by the speed-control gear set to move upward; wherein when the first swing link is returned to the original position by the elastic recovery stress of the spring, the second swing link is pressed down by a weight of the speed-control motor and the rack unit to move and return to the original position and a second down force is further generated to drive the second unidirectional bearing and make the second unidirectional gear rotate for a period of time; then the transmission gear set is rotated along with the second unidirectional gear for a period of time; wherein when the second swing link and the loading base are driven to move upward by the speed-control gear set getting a driving force from the speed-control motor, the upper clutch switch on the shock absorber is pushed to move upward until the upper activation portion of the rack triggers the upper clutch switch to make the speed-control motor stop supplying power to the clutch; wherein the speed-control motor is further mounted to the loading base; wherein when the transmission gear set is driven to rotate, the idler gear set is driven to rotate by the transmission gear set and the idler is rotated along with the idler gear set; after starting to rotate along with the idler gear set, the idler drives the idler gear set, the generator main-shaft gear, and the generator main shaft to rotate for a period of time; wherein the wind activation gear set is rotated to drive the transmission gear set so that the idler gear set, the generator main-shaft gear, and the generator main shaft are driven by the idler to rotate for a period of time when the wind turbine machine is driven to rotate by the wind force with the preset value or the value higher than the preset value; wherein the rack unit on the speed-control motor is driven by the electric power so that the speed-control gear set and the transmission gear set are respectively driven by the first unidirectional gear and the second unidirectional gear and the transmission gear set is rotated for a period of time when the wind turbine machine is driven by the wind force with the value lower than the preset value; thereby the idler drives the idler gear set, the generator main-shaft gear, and the generator main shaft to rotate for a period and keep at a constant speed during a period of time without sufficient wind power..

### BRIEF DESCRIPTION OF THE DRAWINGS

Fig. 1 s a perspective view of an embodiment according to the present invention;
Fig. 2 is a partial enlarged view of a rack unit of a speed control device of the embodiment in one direction according to the present invention;
Fig. 3 is a side view of the embodiment in Fig. 2 in one direction according to the present invention;
Fig. 4 is a partial enlarged view of the embodiment in Fig. 3 according to the present invention;
Fig. 5 is a partial enlarged side view of a first swing link and a second swing link of another embodiment in one direction according to the present invention;
Fig. 6 is schematic drawing showing the first swing link of the embodiment in Fig. 5 being pressed down by a rack to move according to the present invention;
Fig. 7 is schematic drawing showing upward movement of a loading base of the embodiment in Fig. 5 according to the present invention;
Fig. 8 is a partial enlarged view of the embodiment according to the present invention;
Fig. 9 is a partial enlarged top view of the embodiment according to the present invention;
Fig. 10 is a partial enlarged perspective view of a wind activation gear set and a transmission gear set of an embodiment in one direction according to the present invention;
Fig. 11 is a partial enlarged perspective view of a wind activation gear set and a transmission gear set of an embodiment in another direction according to the present invention;
Fig. 12 is a partial enlarged view of the embodiment in Fig. 3 according to the present invention;
Fig. 13 is a partial enlarged top view of the embodiment in Fig. 12 according to the present invention;
Fig. 14 is a partial enlarged perspective view of a speed-control gear set and a transmission gear set of an embodiment in one direction according to the present invention;
Fig. 15 is a partial enlarged perspective view of a speed-control gear set and a transmission gear set of an embodiment in another direction according to the present invention;
Fig. 16 is a partial enlarged sectional view of a bearing of a speed-control gear set of an embodiment in a direction according to the present invention;
Fig. 17 is a partial enlarged sectional view of a bearing of a transmission gear set of an embodiment in a direction according to the present invention;
Fig. 18 is a partial enlarged sectional view of a bearing of a wind activation gear set of an embodiment in one direction according to the present invention;
Fig. 19 is a partial enlarged sectional view of a bearing of a wind activation gear set of an embodiment in another direction according to the present invention;
Fig. 20 is a partial enlarged perspective view of a first horseshoe-shaped clamp of the embodiment in Fig. 1 according to the present invention;
Fig. 21 is an exploded view of the first horseshoe-shaped clamp of the embodiment in Fig. 20 according to the present invention;
Fig. 22 is a partial enlarged perspective view of a second horseshoe-shaped clamp of an embodiment according to the present invention;
Fig. 23 is an exploded view of the second horseshoe-shaped clamp of the embodiment in Fig. 22 according to the present invention;

### DETAILED DESCRIPTION OF THE PREFFERED EMBODIMENT

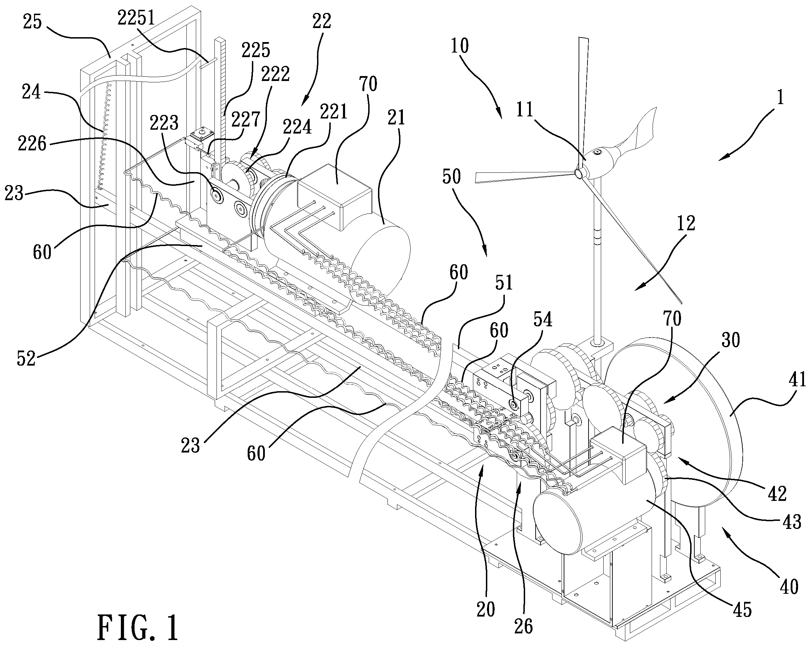

Refer to Fig. 1, a speed control device for control of idlers of wind turbines to rotate at a constant speed is provided. The speed control device 1 includes a wind-powered electrical generator 10, a first speed control unit 20, a transmission gear set 30, an idler energy storage unit 40, and a second speed control unit 50.

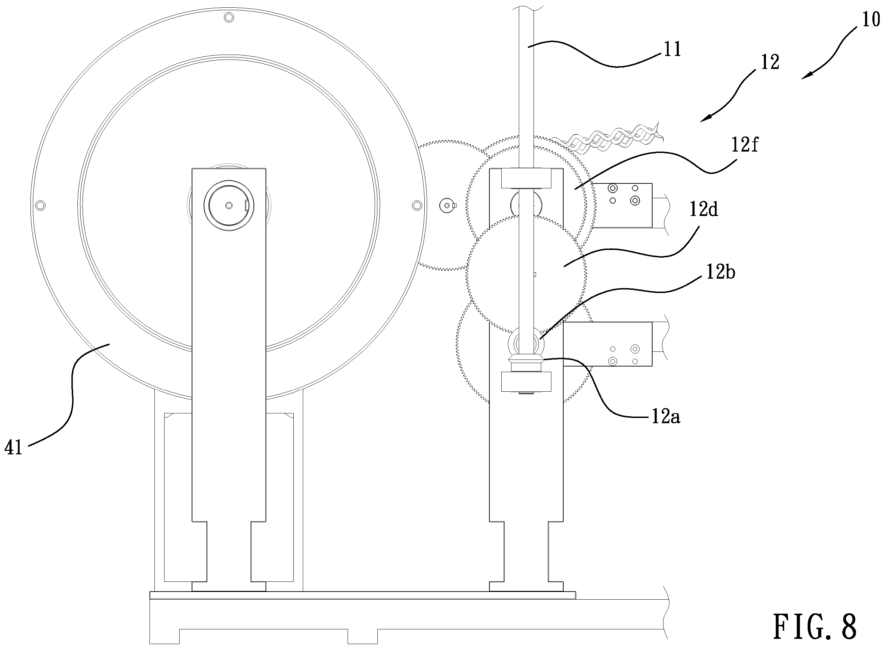

The wind-powered electrical generator 10 consists of a wind turbine machine 11 and a wind activation gear set 12, as shown in Fig. 1, 8, 9, and 11. When the wind turbine machine 11 is driven to rotate by a wind force with a preset value or a value higher than the preset value, the wind activation gear set 12 is further driven by the wind turbine machine 11 to rotate and operate.

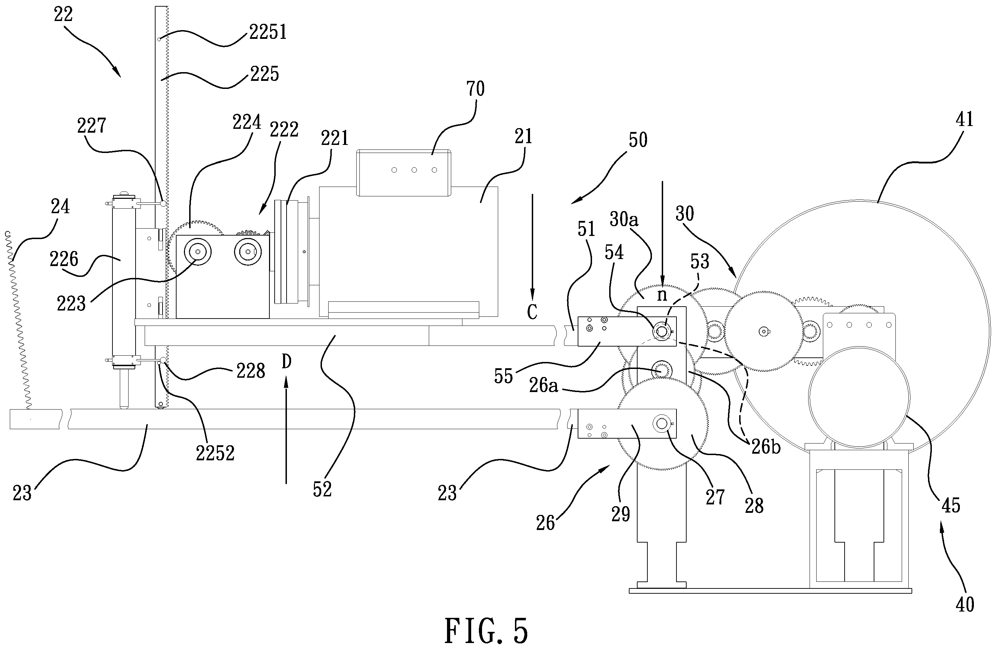

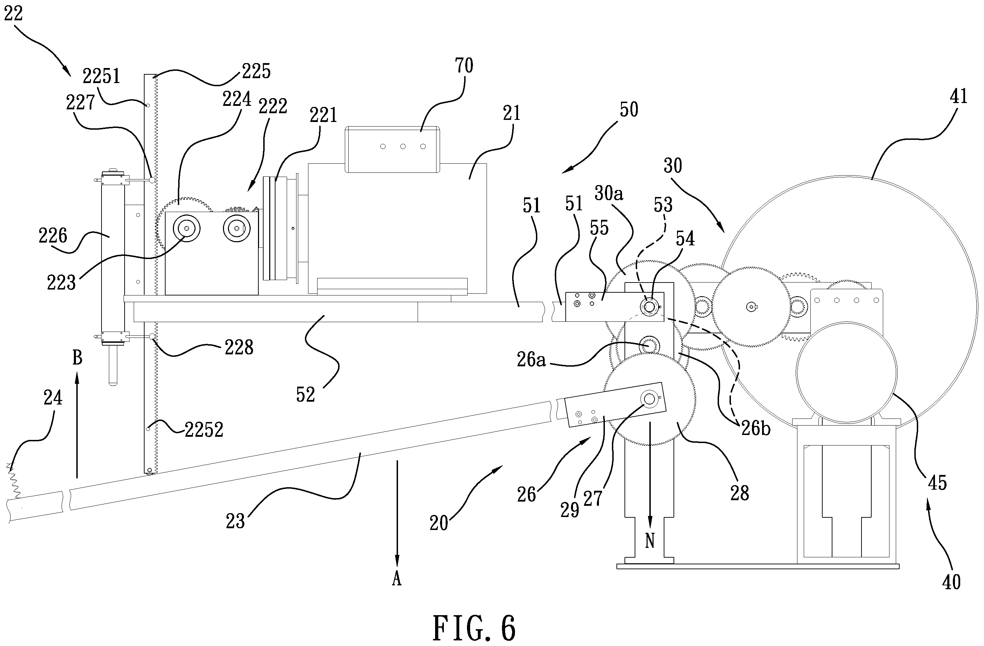

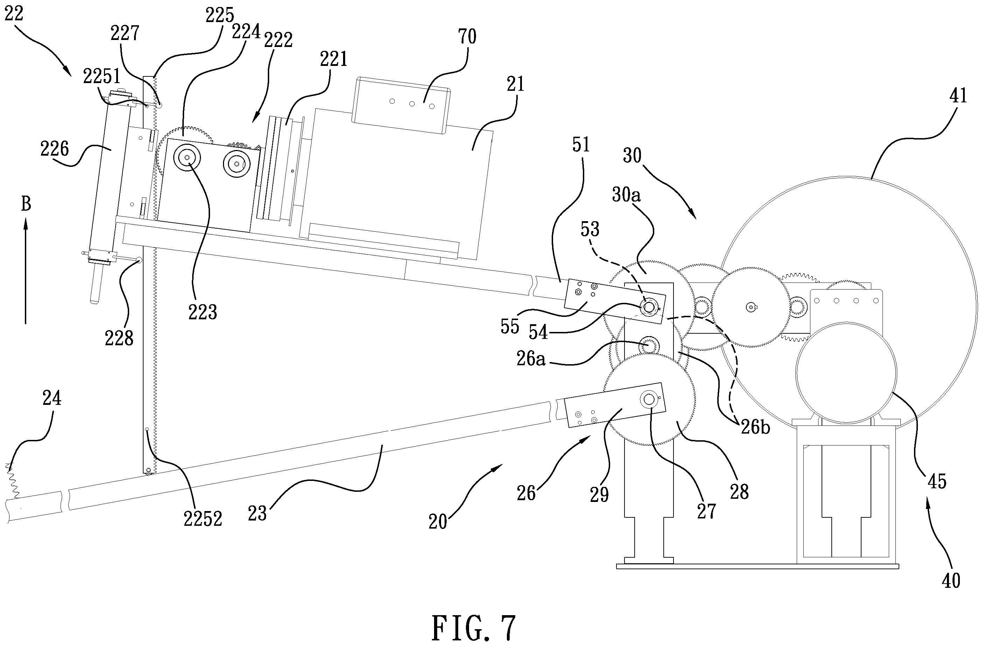

The first speed control unit 20 has a speed-control motor 21, a rack unit 22, a first swing link 23, a spring 24, a frame 25, a speed-control gear set 26, a first unidirectional bearing 27, and a first unidirectional gear 28 as shown in Fig 5. The rack unit is located at and driven by the speed-control motor 21. The rack unit 22 includes a clutch 221, a rack gear set 222, a rack-connected gear 224, a rack 225, a shock absorber 226, au upper clutch switch 227, and a lower clutch switch 228 as shown in Fig 6. The clutch 221 drives the rack gear set 222 which drives the rack-connected gear 224. The rack 225 is driven to move downward by the rack-connected gear 224 and provided with an upper activation portion 2251 and a lower activation portion 2252 as shown in Fig 7. The upper clutch switch 227 and the lower clutch switch 228 are respectively disposed on an upper end and a lower end of the shock absorber 226 and both located between the upper activation portion 2251 and the lower activation portion 2252 of the rack 225. The clutch 221 is activated and then the rack gear set 222, the rack-connected gear 224, and the rack 225 are driven in turn to make the rack 225 move downward when the speed-control motor 21 drives the clutch 221. One end of the spring 24 is arranged at the frame 25 as shown in Fig. 1 while the other end of the spring 24 is mounted to the first swing link 23 as shown in Fig. 5. The speed-control gear set 26, the first unidirectional bearing 27, and the first unidirectional gear 28 are located on the same end of the first swing link 23 while the speed-control motor 21, the rack unit 22, and the spring 24 are located on the other end of the first swing link 23 opposite to the end of the first swing link 23 with the speed-control gear set 26, the first unidirectional bearing 27, and the first unidirectional gear 28. The speed-control gear set 26 is able to be driven by the first unidirectional gear 28 which is arranged at the first unidirectional bearing 27 and able to rotate for a period of time while being driven as shown in Fig. 7. When the speed-control motor 21 is driven by electric power, the clutch 221 of the rack unit 22 is driven by the speed-control motor 21 to operate and rotate, thus the first swing link 23 is pressed down (as an arrow A in Fig. 6 indicates) and moved by the rack 225 of the rack unit 22 and a first down force N is generated to drive the first unidirectional bearing 27 so that the first unidirectional gear 28 is rotated for a period of time. Now the speed-control gear set 26 is rotated along with the first unidirectional gear 28 for a period of time. When the first swing link 23 is released from the first down force N caused by the rack 225 of the rack unit 22, the first swing link 23 is returned to the original position by elastic recovery stress of the spring 24. Now the clutch 221 is at a state of temporarily stopping driving the rack gear set 222 and the rack-connected gear 224 so that both the rack gear set 222 and the rack-connected gear 224 can rotate freely, without limited by the direction of rotation. Thereby the rack 225 is pushed by the first swing link 23 to move upward (as an arrow D in Fig. 5 indicates) and back to its original position until the lower activation portion 2252 triggers the lower clutch switch 228 to make the speed-control motor 21 activate and supply power to the clutch 221 as shown in Fig. 5.

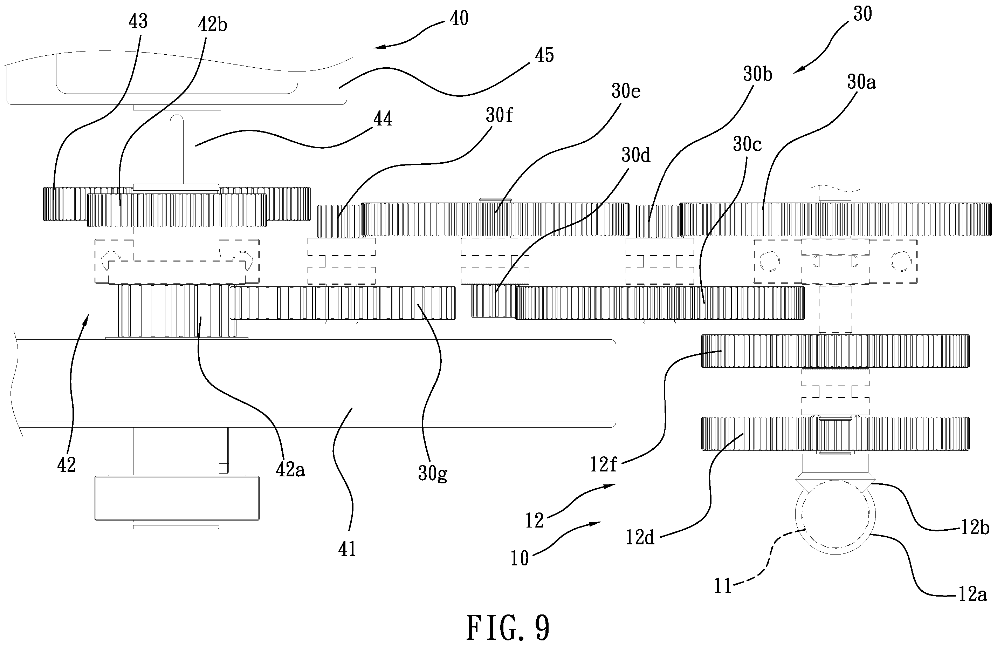

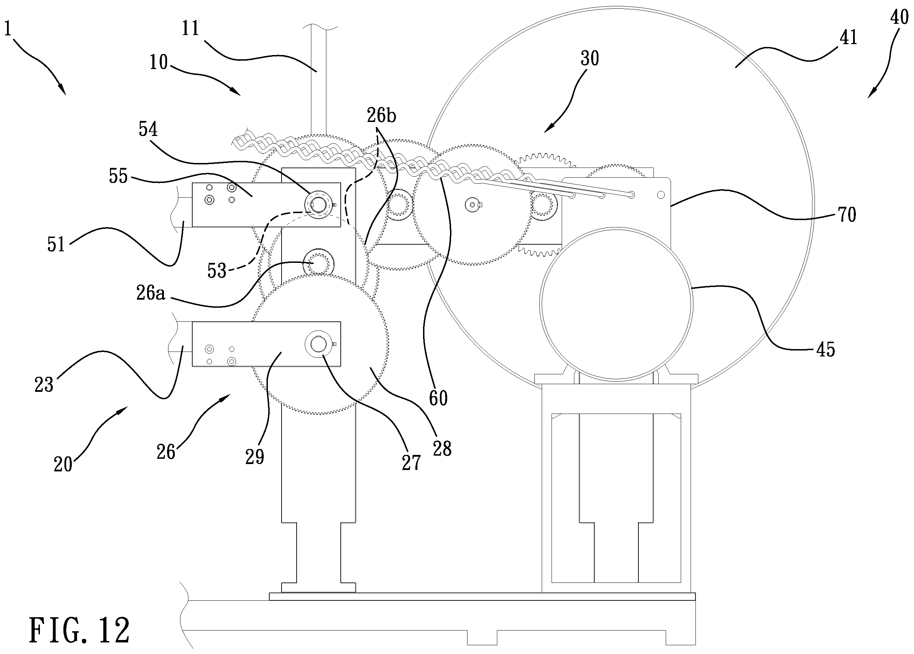

The transmission gear set 30 is driven by the wind activation gear set (wind-powered gear set) 12 (as shown in Fig. 9-12) or the speed-control gear set 26 (as shown in Fig. 12-14) to operate and rotate.

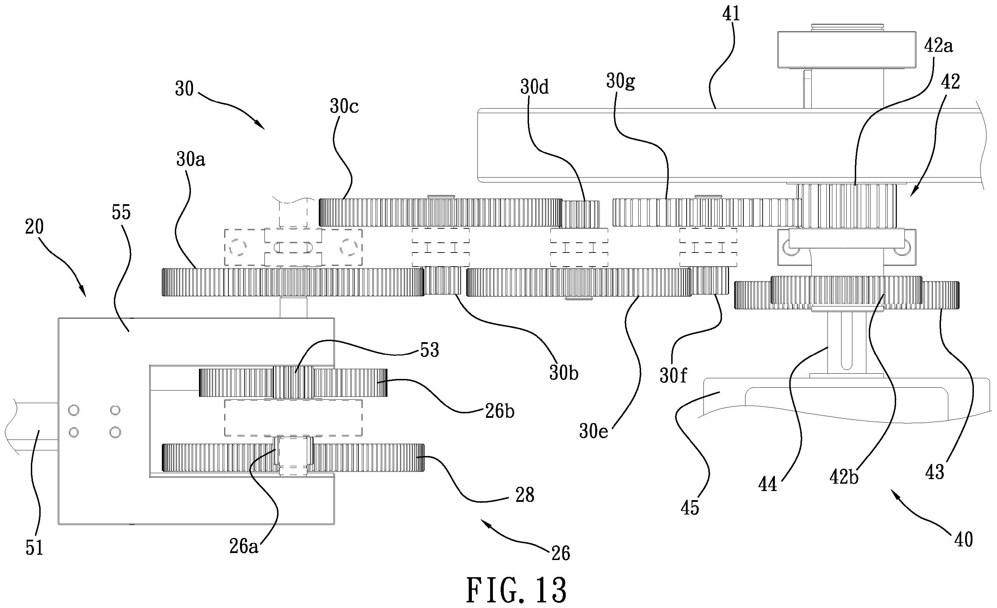

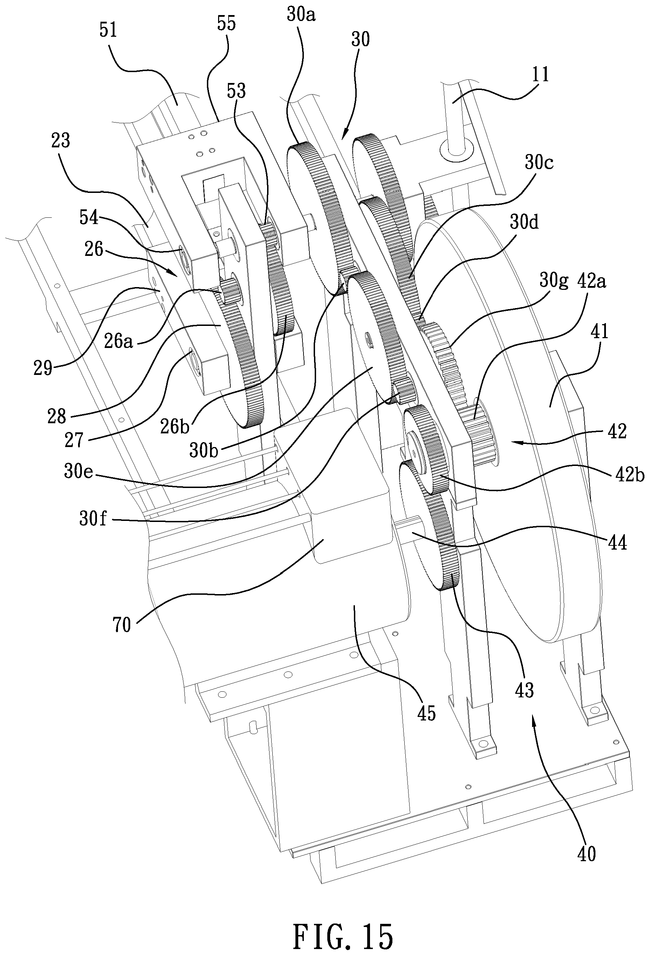

As shown in Fig. 13 and 15, the idler energy storage unit 40 consists of an idler 41, an idler gear set 42, a generator main-shaft gear 43, a generator main shaft 44, and a generator 45. The idler 41 is able to be driven to rotate by the idler gear set 42. After the idler 41 starting to rotate, the idler gear set 42 is driven to rotate for a period of time. The generator main-shaft gear 43 is driven to rotate by the idler gear set 42 and the generator main shaft 44 is rotated along with the generator main-shaft gear 43. By the idler 41, the generator 45 is rotated for a period of time to create and output electric power. When the idler 41 is rotated, the idler gear set 42 drives the generator main-shaft gear 43 and the generator main shaft 44 to rotate synchronously for a period of time. Thereby the generator 45 can generate electric power due to rotation of the generator main shaft 44. As shown in Fig. 1, the generator 45 is electrically connected to the speed-control motor 21. When the wind turbine machine 11 is driven by a wind force with a value lower than the preset value, the generator 45 provides electric power to the speed-control motor 21 for driving the speed-control motor 21 to operate.

As shown in Fig. 1, the second speed control unit 50 is composed of a second swing link 51, a loading base 52, a second unidirectional bearing 54, and a second unidirectional gear 53. Refer to Fig. 5, one end of the second swing link 51 is disposed on the speed-control gear set 26 and the loading base 52 is mounted to the other end of the second swing link 51, opposite to the end with the speed-control gear set 26. The second unidirectional bearing 54 and the second unidirectional gear 53 are disposed on the end of the second swing link 51, opposite to the end with the loading base 52. The second unidirectional gear 53 drives the transmission gear set 30. Still refer to Fig. 5, the second unidirectional gear 53 is arranged at the second unidirectional bearing 54 and able to rotate for a period of time while being driven. As shown in Fig. 5, the second swing link 51 and the loading base 52 are supported by the speed-control gear set 26 and suspended in air. The loading base 52 is driven by the speed-control gear set 26 to move upward, as an arrow B in Fig. 7 indicates. When the first swing link 23 is returned to the original position by the elastic recovery stress of the spring 24, as shown in Fig. 5, the second swing link 51 is pressed to move (as an arrow C in Fig. 5 indicates) and return to the original position by a weight on the loading base 52. A second down force n is further generated to drive the second unidirectional bearing 54 and make the second unidirectional gear 53 rotate for a period of time. At the moment, the transmission gear set 30 is rotated for a period of time along with the second unidirectional gear 53.

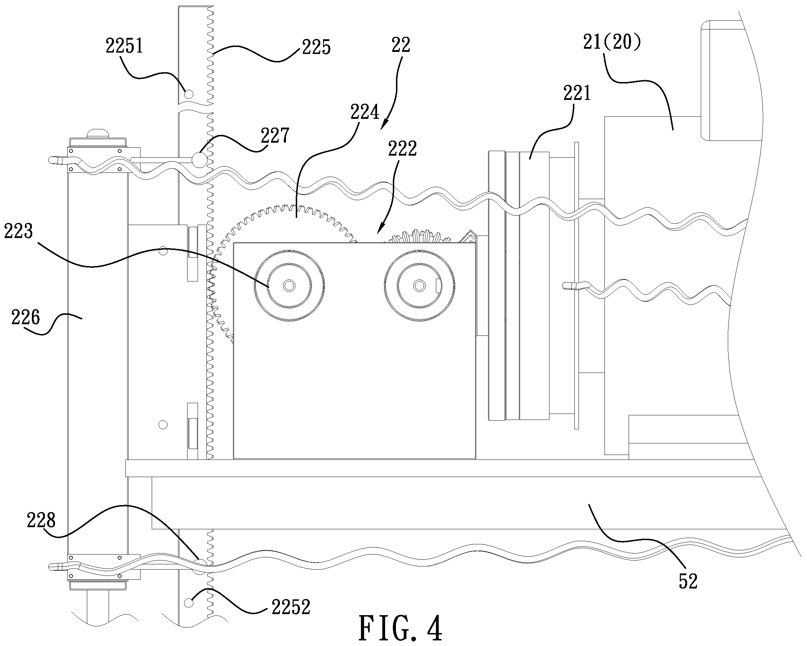

As shown in Fig. 4 and 5, the control motor 21, the clutch 221, the rack gear set 222, the rack-connected gear 224, and the shock absorber 226 are all mounted to the loading base 52. After the first swing link 23 being returned to its original position by the elastic recovery stress of the spring 24, the second swing link 51 is pressed downward to move and return to its original position by a weight of the control motor 21 and the rack unit 22 (as an arrow C in Fig. 5 indicates). A second down force n is further generated to drive the second unidirectional bearing 54 and make the second unidirectional gear 53 rotate for a period of time, as shown in Fig. 5. At the moment, the transmission gear set 30 is rotated along with the second unidirectional gear 53 for a period of time. When the second swing link 51 and the loading base 52 are driven to move upward (as an arrow B in Fig. 30 indicates) by the speed-control gear set 26 getting a driving force from the speed-control motor 21, the upper clutch switch 227 on the shock absorber 226 is pushed to move upward until the upper activation portion 2251 of the rack 225 triggers the upper clutch switch 227 to make the speed-control motor 21 stop supplying power to the clutch 221, as shown in Fig. 7.

As shown in Fig. 15, when the transmission gear set 30 is driven to rotate, the idler gear set 42 is driven to rotate by the transmission gear set 30 so that the idler 41 drives the idler gear set 42, the generator main-shaft gear 43, and the generator main shaft 44 to rotate for a period and keep at a constant speed after rotating along with the idler gear set 42.

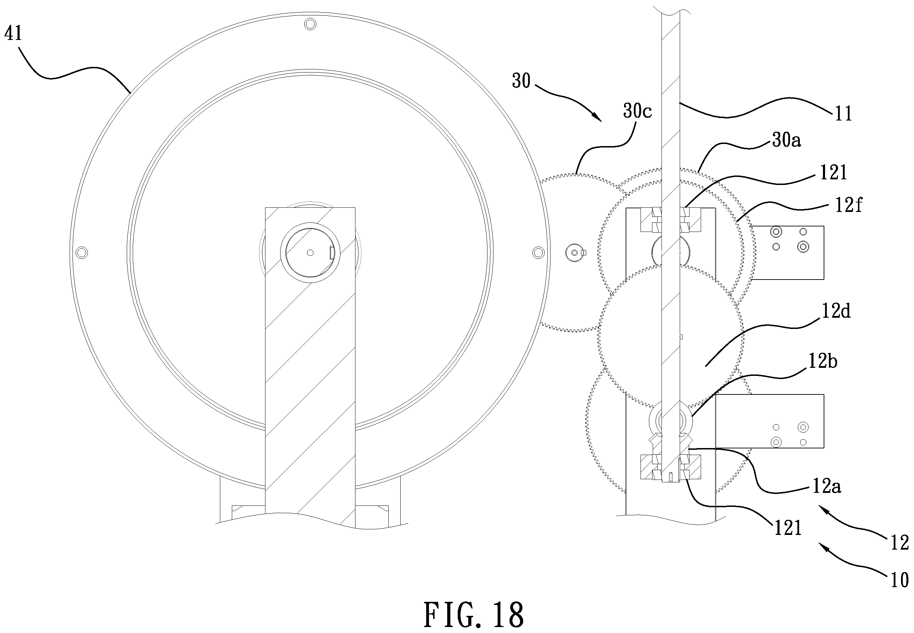

When the wind turbine machine 11 is driven by a wind force with the preset value or a value higher than the preset value, the wind activation gear set 12 is rotated to drive the transmission gear set 30, as shown in Fig. 18. Thus the idler gear set 42, the generator main-shaft gear 43, and the generator main shaft 44 are driven by the idler 41 to rotate for a period of time and keep at a constant speed, as shown in Fig. 15.

When the wind turbine machine 11 is driven by a wind force with a value lower than the preset value, the rack unit 22 on the speed-control motor 21 is driven by the electric power so that the speed-control gear set 26 is driven by the first unidirectional gear 28 and the transmission gear set 30 is driven by the second unidirectional gear 53 to rotate for a period of time, as shown in Fig. 15. Thereby during a period of time without sufficient wind power, the idler 41 can drive the idler gear set 42, the generator main-shaft gear 43, and the generator main shaft 44 to rotate for a period and keep at a constant speed, as shown in Fig. 15.

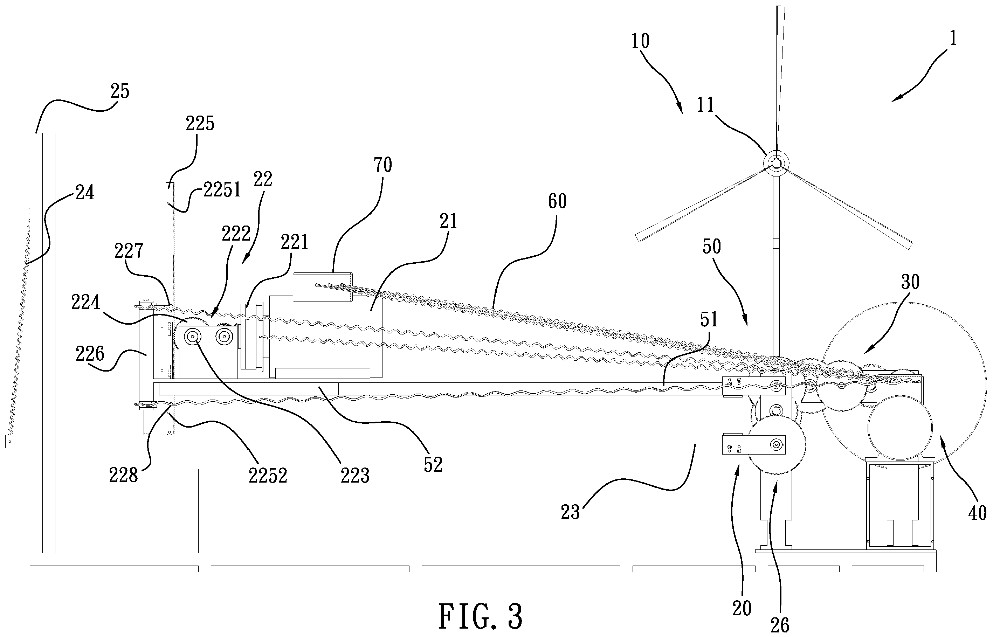

Refer to Fig. 3, the upper clutch switch 227 and the lower clutch switch 228 are both electrically connected to the control unit 70 by a corresponding wire 60. When the upper activation portion 2251 triggers the upper clutch switch 227, the speed-control motor 21 further stops supplying power to the clutch 81 under control of the control unit 70, as shown in Fig. 7. When the lower activation portion 2252 triggers the lower clutch switch 228, the speed-control motor 21 further supplies power to the clutch 221 under control of the control unit 70, as shown in Fig. 5.

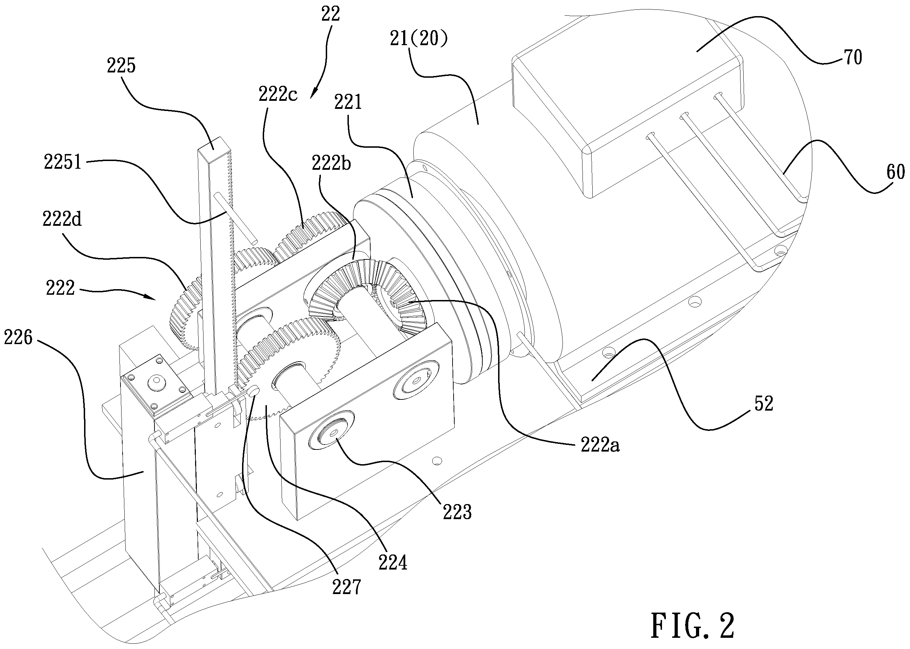

Refer to Fig. 2, the rack gear set 222 is composed of a plurality of gears 222a, 222b, 222c, and 222d, but not limited. Once the gear 222a is rotated, the gear 222b, the gear 222c, and the gear 222d are driven in turn. Lastly the gear 222d further drives the rack-connected gear 224, as shown in Fig. 2. The rack-connected gear 224 further includes a bearing 223, but not limited.

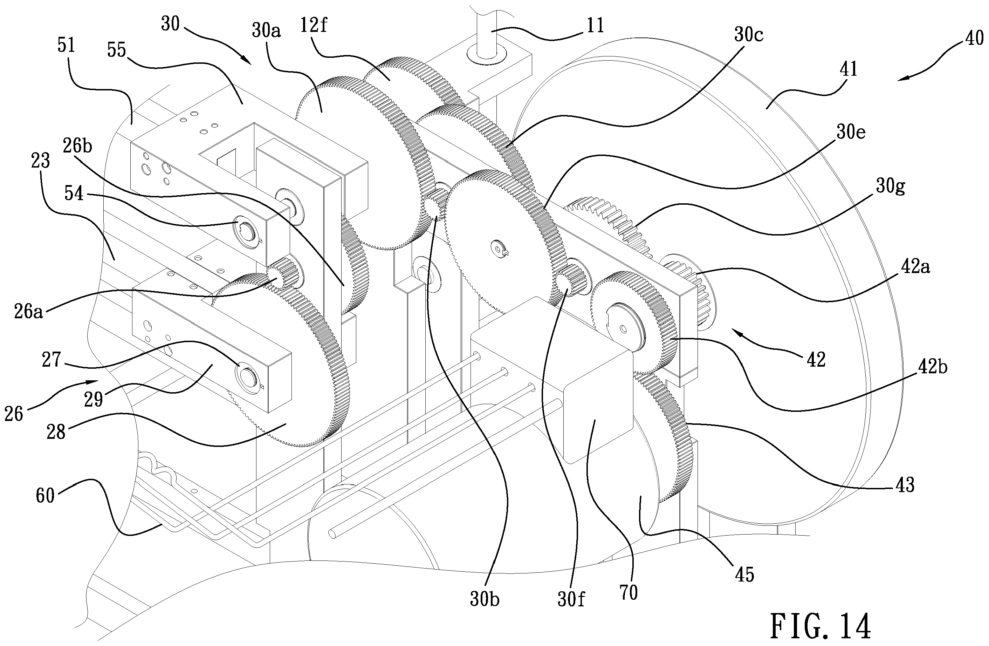

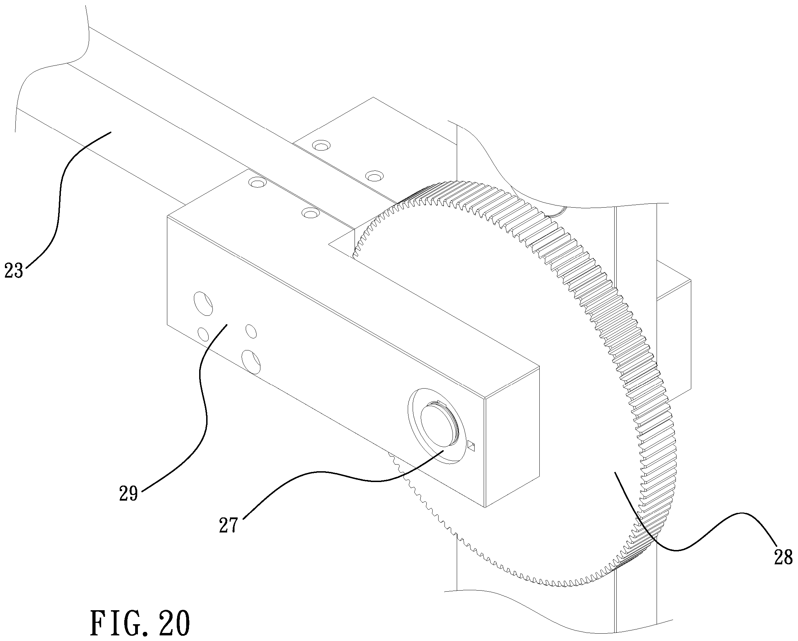

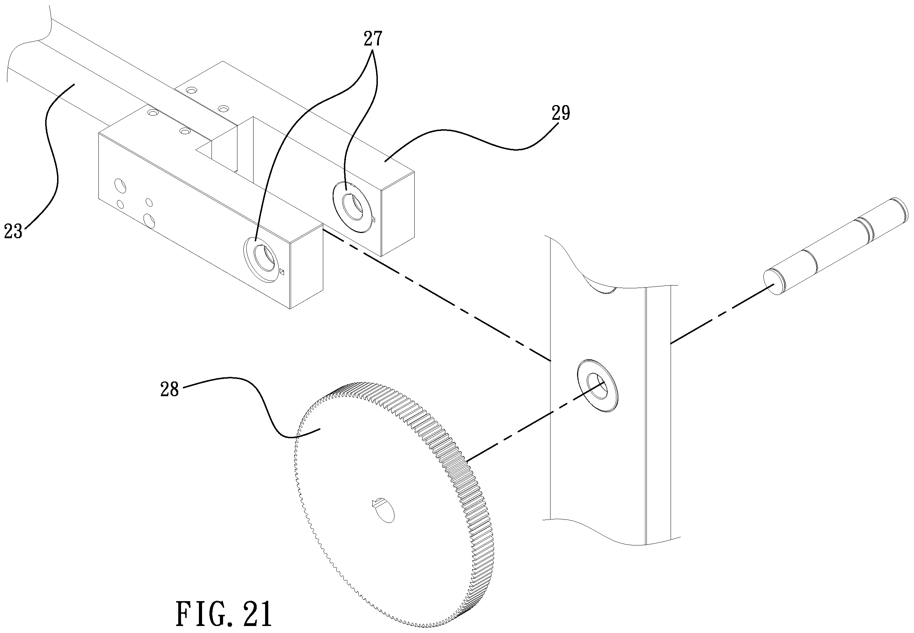

Refer to Fig. 20 and 21, the first swing link 23 further includes a first horseshoe-shaped clamp 29 which is located at the same end of the first swing link 23 with the speed-control gear set 26, the first unidirectional bearing 27, and the first unidirectional gear 28, as shown in Fig. 14. The first unidirectional bearing 27 and the first unidirectional gear 28 are further mounted in the first horseshoe-shaped clamp 29 of the first swing link 23.

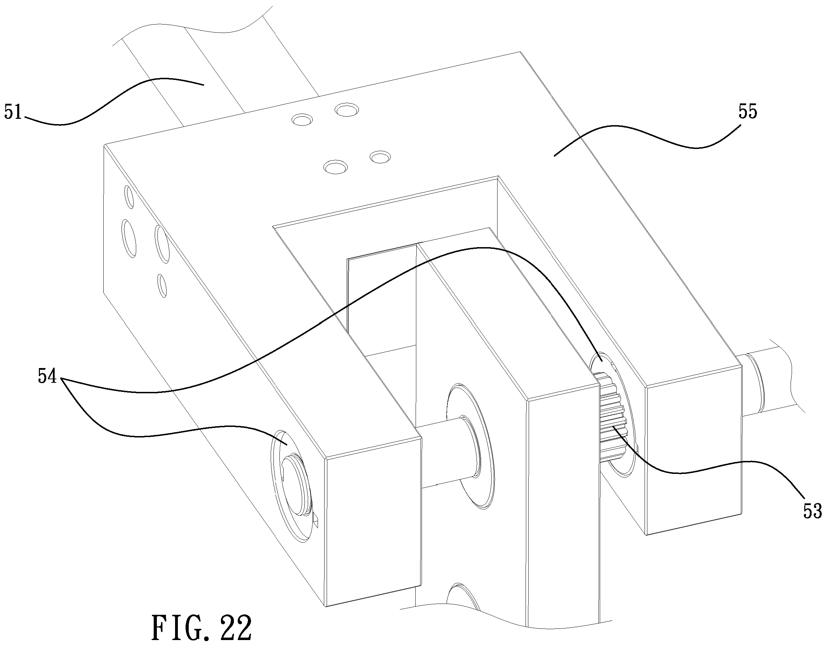

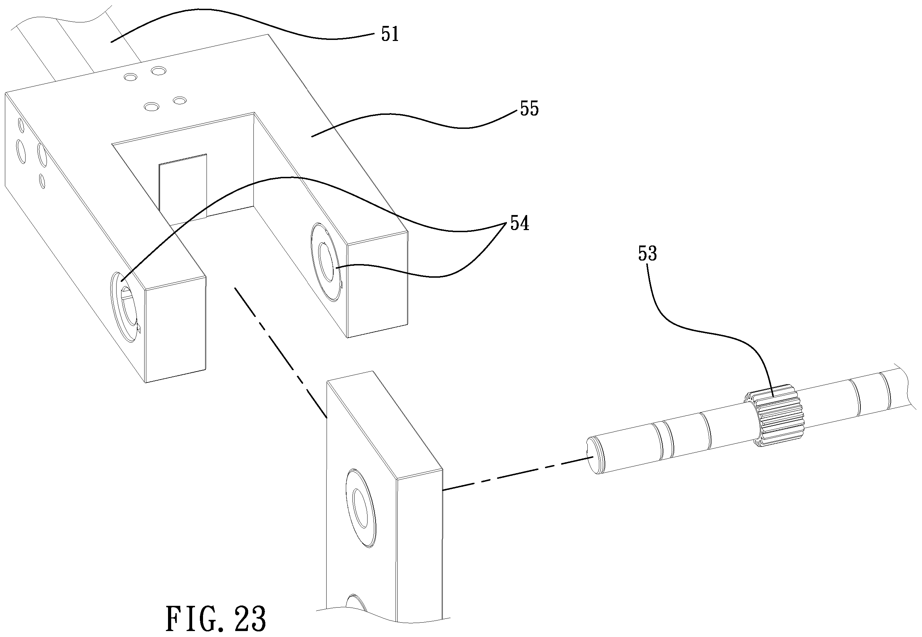

Refer to Fig. 22 and 23, the second swing link 51 further includes a second horseshoe-shaped clamp 55 which is located at the same end of the second swing link 51 with the second unidirectional bearing 54, and the second unidirectional gear 53. The second unidirectional bearing 54 and the second unidirectional gear 53 are further mounted in the second horseshoe-shaped clamp 55 of the second swing link 51.

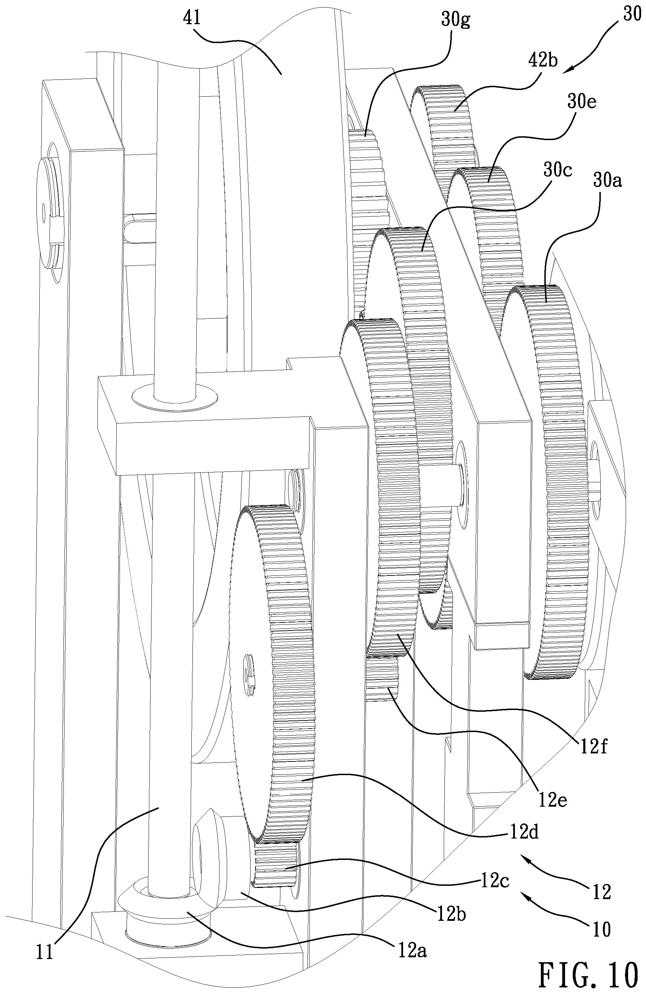

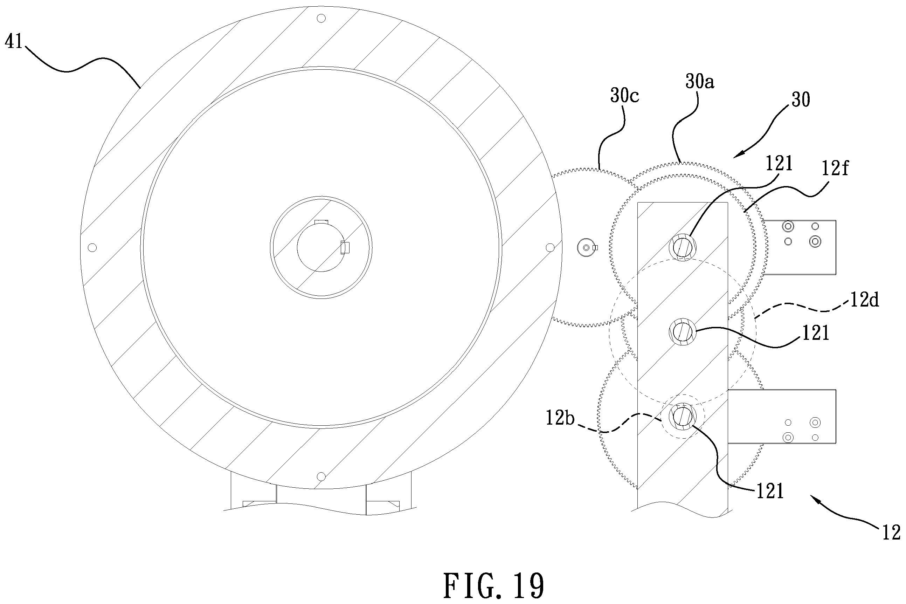

Refer to Fig. 10, the wind activation gear set 12 is composed of a plurality of gears 12a, 12b, 12c, 12d, 12e, and 12f, but not limited. At least one of the above gears 12a, 12b, 12c, 12d, 12e, and 12f is provided with a bearing 121, as shown in Fig. 18. After rotation of the gear 12a, the rotating gear 12a drives the gear 12b, the rotating gear 12b drives the gear 12c, the rotating gear 12c further drives the gear 12d, and the rotating gear 12e further drives the gear 12f. Lastly the gear 12f drives the transmission gear set 30 (as shown in Fig. 18, 19).

Refer to Fig. 5, the speed-control gear set 26 is composed of a plurality of gears 26a, 26b. At least one of the gears 26a, 26b is provided with a bearing 261, as shown in Fig. 15. After starting to rotate, the gear 26a drives the gear 26b and then the gear 26b further drives the second unidirectional gear 53, as shown in Fig. 15.

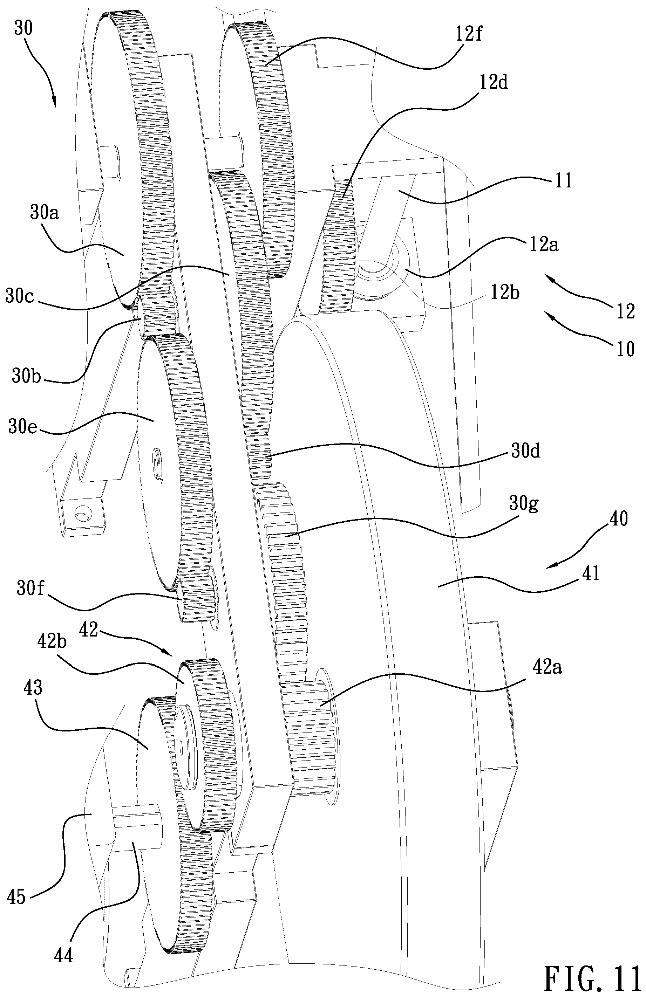

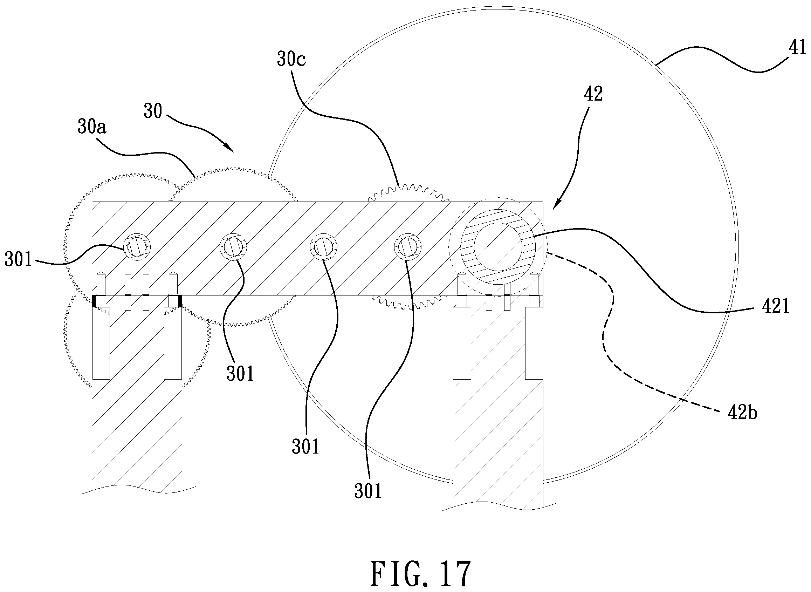

Refer to Fig. 13, the transmission gear set 30 is formed by a plurality of gears 30a, 30b, 30c, 30d, 30e, 30f, and 30g. At least one of the gears 30a, 30b, 30c, 30d, 30e, 30f, and 30g is provided with a bearing 301, as shown in Fig. 17. After starting to rotate, the rotating gear 30a drives the gear 30b which then drives the gear 30c. Next the rotating gear 30c drives the gear 30d, the rotating gear 30d drives the gear 30e, and the rotating gear 30e further drives the gear 30f. Lastly the gear 30g drives the idler gear set 42, as shown in Fig. 9, 11.

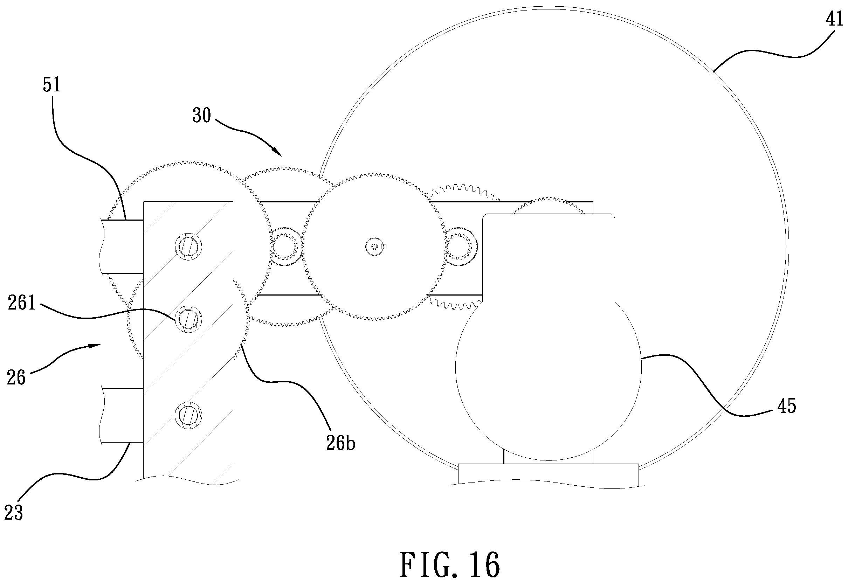

Refer to Fig. 15, the idler gear set 42 is composed of a plurality of gears 42a, 42b. At least one of the gears 42a, 42b is provided with a bearing 421, as shown in Fig. 16. After starting to rotate, the gear 42a drives the gear 42b and then the gear 42b further drives the generator main-shaft gear 43, as shown in Fig. 14.

When the wind turbine machine 11 is driven by a wind force with the preset value or a value higher than the preset value, the gear 12f of the wind activation gear set 12 is rotated to drive the gear 30a of the transmission gear set 30, as shown in Fig. 11, 18. Then the gear 30g of the transmission gear set 30 drives the gear 42a of the idler gear set 42 and the idler 41. Then the idler 41 further drives the gear 42b to drive the generator main-shaft gear 43 and the generator main shaft 44 to rotate for a period of time, as shown in Fig. 15. As shown in Fig. 15, then the wind turbine machine 11 is driven by a wind force with a value lower than the preset value, the rack unit 22 on the speed-control motor 21 is driven by the electric power so that the gear 26a of the speed-control gear set 26 is driven by the first unidirectional gear 28 and the gear 30a of the transmission gear set 30 is driven by the second unidirectional gear 53. Thus the transmission gear set 30 is rotated for a period of time. Later the gear 30g of the transmission gear set 30 drives the gear 42a of the idler gear set 42 and the idler 41 so that the idler 41 drives the idler gear set 42, the generator main-shaft gear 43, and the generator main shaft 44 to rotate for a while and keep at a constant speed during a period of time without sufficient wind power, as shown in Fig. 15.

Refer to Fig. 1, the speed-control motor 21 of the first speed control unit 20 is electrically connected to the generator 45 by a wire 60 and the speed control device 1 further includes a control unit 70 which is arranged between the speed-control motor 21 and the generator 45 and used for control of the generator 45 to provide the electric power to the speed-control motor 21 for driving the speed-control motor 21 to work while the wind force applied to the wind turbine machine 11 having the value lower than the preset value.

## Claims

1. A speed control device for control of idlers of wind turbines to rotate at a constant speed comprising:
a wind-powered electrical generator having a wind turbine machine and a wind activation gear set;
wherein the wind activation gear set is driven to rotate by the wind turbine machine when the wind turbine machine is driven to rotate by a wind force with a preset value or a value higher than the preset value;
a first speed control unit provided with a speed-control motor, a rack unit, a first swing link, a spring, a frame, a speed-control gear set, a first unidirectional bearing, and a first unidirectional gear; wherein the rack unit is located at and driven by the speed-control motor; the rack unit includes a clutch, a rack gear set, a rack-connected gear, a rack, a shock absorber, au upper clutch switch, and a lower clutch switch; wherein the clutch drives the rack gear set which drives the rack-connected gear; the rack is driven to move downward by the rack-connected gear and provided with an upper activation portion and a lower activation portion; the upper clutch switch and the lower clutch switch are respectively disposed on an upper end and a lower end of the shock absorber and both located between the upper activation portion and the lower activation portion of the rack; wherein the clutch is activated and then the rack gear set, the rack-connected gear, and the rack are driven in turn to make the rack move downward when the speed-control motor drives the clutch; wherein one end of the spring is arranged at the frame while the other end of the spring is mounted to the first swing link; the speed-control gear set, the first unidirectional bearing, and the first unidirectional gear are located on the same end of the first swing link while the speed-control motor, the rack unit, and the spring are located on the other end of the first swing link opposite to the end of the first swing link with the speed-control gear set, the first unidirectional bearing, and the first unidirectional gear; the speed-control gear set is able to be driven by the first unidirectional gear which is arranged at the first unidirectional bearing and able to rotate for a period of time while being driven; wherein when the speed-control motor is driven by electric power, the clutch of the rack unit is driven by the speed-control motor to operate and rotate; thus the first swing link is pressed down and moved by the rack of the rack unit and a first down force is generated to drive the first unidirectional bearing so that the first unidirectional gear is rotated for a period of time; now the speed-control gear set is rotated along with the first unidirectional gear for a period of time; wherein when the first swing link is released from the first down force caused by the rack of the rack unit, the first swing link is returned to the original position by elastic recovery stress of the spring; at the moment, the rack is pushed by the first swing link to move upward and back to its original position until the lower activation portion triggers the lower clutch switch to make the speed-control motor activate and supply power to the clutch;
a transmission gear set able to be driven by the wind activation gear set or the speed-control gear set to rotate;
an idler energy storage unit having an idler, an idler gear set, a generator main-shaft gear, a generator main shaft, and a generator; the idler able to be driven to rotate by the idler gear set; after the idler starting to rotate, the idler gear set being driven to rotate for a period of time; the generator main-shaft gear able to be driven to rotate by the idler gear set and the generator main shaft being rotated along with the generator main-shaft gear; the generator creating the electric power and outputting the electric power by rotation of the generator main shaft; wherein the idler gear set drives the generator main-shaft gear and the generator main shaft to rotate synchronously for a period of time when the idler is rotated so that the generator generates the electric power by rotation of the generator main shaft; wherein the generator is electrically connected to the speed-control motor; wherein the generator provides the electric power to the speed-control motor for driving the speed-control motor to operate when the wind turbine machine is driven by a wind force with a value lower than the preset value; and
a second speed control unit including a second swing link having one end disposed on the speed-control gear set, a loading base , a second unidirectional bearing, and a second unidirectional gear; the loading base mounted to the other end of the second swing link, opposite to the end with the speed-control gear set; the speed-control motor, the clutch, the rack gear set, the rack-connected gear, and the shock absorber all mounted to the loading base while the second unidirectional bearing and the second unidirectional gear disposed on the other end of the second swing link, opposite to the end with the loading base; the second unidirectional gear for driving the transmission gear set, arranged at the second unidirectional bearing, and able to rotate for a period of time while being driven; wherein the second swing link and the loading base are supported by the speed-control gear set, suspended in air, and able to be driven by the speed-control gear set to move upward; wherein when the first swing link is returned to the original position by the elastic recovery stress of the spring, the second swing link is pressed down by a weight of the speed-control motor and the rack unit to move and return to the original position and a second down force is further generated to drive the second unidirectional bearing and make the second unidirectional gear rotate for a period of time; then the transmission gear set is rotated along with the second unidirectional gear for a period of time; wherein when the second swing link and the loading base are driven to move upward by the speed-control gear set getting a driving force from the speed-control motor, the upper clutch switch on the shock absorber is pushed to move upward until the upper activation portion of the rack triggers the upper clutch switch to make the speed-control motor stop supplying power to the clutch; wherein the speed-control motor is further mounted to the loading base; wherein when the transmission gear set is driven to rotate, the idler gear set is driven to rotate by the transmission gear set and the idler is rotated along with the idler gear set; after starting to rotate along with the idler gear set, the idler drives the idler gear set, the generator main-shaft gear, and the generator main shaft to rotate for a period of time; wherein the wind activation gear set is rotated to drive the transmission gear set so that the idler gear set, the generator main-shaft gear, and the generator main shaft are driven by the idler to rotate for a period of time when the wind turbine machine is driven to rotate by the wind force with the preset value or the value higher than the preset value; wherein the rack unit on the speed-control motor is driven by the electric power so that the speed-control gear set and the transmission gear set are respectively driven by the first unidirectional gear and the second unidirectional gear and the transmission gear set is rotated for a period of time when the wind turbine machine is driven by the wind force with the value lower than the preset value; thereby the idler drives the idler gear set, the generator main-shaft gear, and the generator main shaft to rotate for a period and keep at a constant speed during a period of time without sufficient wind power.

2. The speed control device as claimed in claim 1, wherein the speed-control motor of the first speed control unit is electrically connected to the generator by a wire.

3. The speed control device as claimed in claim 1, wherein the speed control device further includes a control unit arranged between the speed-control motor and the generator; wherein the control unit is used for control of the generator to provide the electric power to the speed-control motor for driving the speed-control motor to work while the wind force applied to the wind turbine machine having the value lower than the preset value.

4. The speed control device as claimed in claim 1, wherein the upper clutch switch and the lower clutch switch are both electrically connected to the control unit by a corresponding wire; wherein the speed-control motor stops supplying power to the clutch under control of the control unit when the upper activation portion triggers the upper clutch switch; wherein the speed-control motor supplies power to the clutch under control of the control unit when the lower activation portion triggers the lower clutch switch.

5. The speed control device as claimed in claim 1, wherein the first swing link further includes a first horseshoe-shaped clamp located at the same end of the first swing link with the speed-control gear set, the first unidirectional bearing, and the first unidirectional gear; wherein the first unidirectional bearing and the first unidirectional gear are further mounted in the first horseshoe-shaped clamp of the first swing link.

6. The speed control device as claimed in claim 1, wherein the second swing link further includes a second horseshoe-shaped clamp located at the same end of the second swing link with the second unidirectional bearing and the second unidirectional gear; wherein the second unidirectional bearing and the second uni directional gear are further mounted in the second horseshoe-shaped clamp of the second swing link.
